# EUROPÄISCHE PATENTANMELDUNG

(11) **EP 0 727 229 A2**
(43) Veröffentlichungstag der Anmeldung: **21.08.1996**
(21) Anmeldenummer: 96100869.5
(22) Anmeldetag: 23.01.1996
(51) Int. Cl.: A61L 2/18

(54) **Vorrichtung und Verfahren zum Dosieren einer vorgebbaren Menge einer Flüssigkeit**

(30) Priorität: 11.02.1995 DE 19504556
(71) Anmelder: PKL Verpackungssysteme GmbH, 52441 Linnich (DE)
(72) Erfinder: Emmerich, Rüdiger, D-41515 Grevenbroich (DE); Berger, Jörg, Dr., D-52076 Aachen (DE)
(74) Vertreter: Cohausz & Florack

(57) **Zusammenfassung**

Die Erfindung betrifft eine Vorrichtung und ein Verfahren zum Dosieren einer vorgebbaren Menge einer Flüssigkeit, insbesondere H₂O₂, mit einem Flüssigkeitseinlaß, wenigstens einer Dosierkammer (6) und einem Flüssigkeitsauslaß, bei der die von der Vorrichtung ausgestoßene Menge der Flüssigkeit stets nicht nur ein gleiches Volumen sondern auch die gleichen Eigenschaften aufweist. So soll insbesondere bei ausgasenden Flüssigkeiten, wie beispielsweise H₂O₂, zuverlässig gewährleistet sein, daß eine kontinuierliche Dosierung einer blasenfreien Flüssigkeit ermöglicht wird, um die Konzentration nicht zu verändern. Dies wird vorrichtungsmäßig dadurch gelöst, daß außer der Flüssigkeitsleitung (10) zwischen dem Flüssigkeitseinlaß und dem Flüssigkeitsauslaß eine Druckluftleitung (11) zwischen einem Drucklufteinlaß (11E) und einem Druckluftauslaß (11A) vorgesehen ist und daß wenigstens eine Dosierkammer (6) abwechselnd mit der Flüssigkeitsleitung (10) und mit der Druckluftleitung (11) in Verbindung bringbar ist. Hinsichtlich des Verfahrens ist die Aufgabe durch die folgenen Schritte gelöst:
Befüllen wenigstens einer Dosierkammer (6) mit einer Flüssigkeit, Verschließen der gefüllten Dosierkammer/n (6, 6') durch Lageänderung des beweglichen Elementes (1) und Abgabe der dosierten Flüssigkeitsmenge.

## Beschreibung

Die Erfindung betrifft eine Vorrichtung und ein Verfahren zum Dosieren einer vorgebbaren Menge einer Flüssigkeit, insbesondere H₂O₂, mit einem Flüssigkeitseinlaß, wenigstens einer Dosierkammer und einem Flüssigkeitsauslaß.

Es ist bekannt, zur Aufnahme von Lebensmitteln vorgesehene Packungen vor dem Befüllen mit dem jeweiligen Inhalt zu sterilisieren. Dazu wird das Packungsinnere mit einer entsprechenden Menge eines Entkeimungsmittels wie H₂O₂ bedüst, um ggf. in der Packung vorhandene Keime zuverlässig abzutöten. Die erforderliche Mindestmenge an H₂O₂ richtet sich dabei nach dem Volumen der zu befüllenden Packung.

Aus der DE-PS 27 08 422 ist eine Einrichtung zur impulsweisen Abgabe einer kleinen Flüssigkeitsmenge bekannt, wobei die Flüssigkeitsmengen mittels eines Meßgerätes kontrolliert werden. Dabei weist das Meßgerät ein mit einer größeren Flüssigkeitsmenge füllbares Meßgefäß auf, dessen Auslaß an ein Ausstoßorgan für die kleinen Flüssigkeitsmengen angeschlossen ist, wobei das Meßgefäß eine aus oberem und unterm Fühler bestehende Fühleinrichtung aufweist, die zur Nachfüllung des Meßgefäßes aus einem Vorratsbehälter und eine Zuleitung eine Pumpe steuert. Mittels dieser Pumpe wird dem Meßgefäß ein bestimmtes Füllvolumen zugeführt, um eine ununterbrochene Entnahme der gewünschten Flüssigkeitsmenge zu gewährleisten. Erst wenn der Inhalt des Meßgefäßes eine bestimmte Menge unterschreitet, wird das Meßgefäß mit Hilfe der Pumpe wieder aufgefüllt.

Mit der bekannten Vorrichtung war es zwar möglich, eine vorgebbare Menge an H₂O₂ zu dosieren, jedoch wurde festgestellt, daß aufgrund des abnehmenden Inhaltes des Meßgefäßes während der Entnahme das dort befindliche H₂O₂ ausgaste wodurch eine Volumenänderung eintrat. Bedingt durch die vorhandenen Gasblasen im H₂O₂ wurde die tatsächliche Menge an dosiertem H₂O₂ bei jedem Dosiervorgang geringer, so daß sich - trotz gleicher Volumendosierung - eine geringere Konzentration einstellte. Um die gewünschte keimtötende Wirkung bei der Sterilisierung jedoch zuverlässig gewährleisten zu können, ist eine Änderung der Konzentration des verwendeten H₂O₂ nicht erwünscht, da die Unterschreitung einer Mindestkonzentration eine ausreichende Sterilisierung nicht mehr ermöglicht.

Davon ausgehend liegt der Erfindung die Aufgabe zugrunde, die eingangs genannte und zuvor näher beschriebene Vorrichtung und das entsprechende Verfahren zum Dosieren einer vorgebbaren Menge einer Flüssigkeit so auszugestalten und weiterzubilden, daß die von der Vorrichtung ausgestoßene Menge der Flüssigkeit stets nicht nur ein gleiches Volumen sondern auch die gleichen Eigenschaften aufweist. So soll insbesondere bei ausgasenden Flüssigkeiten, wie beispielsweise H₂O₂, zuverlässig gewährleistet sein, daß eine kontinuierliche Dosierung einer blasenfreien Flüssigkeit ermöglicht wird, um die Konzentration nicht zu verändern.

Vorrichtungsmäßig erfolgt die Lösung der Aufgabe dadurch, daß außer der Flüssigkeitsleitung zwischen dem Flüssigkeitseinlaß und dem Flüssigkeitsauslaß eine Druckluftleitung zwischen einem Drucklufteinlaß und einem Druckluftauslaß vorgesehen ist und daß wenigstens eine Dosierkammer abwechselnd mit der Flüssigkeitsleitung und mit der Druckluftleitung in Verbindung bringbar ist.

Hinsichtlich des Verfahrens ist die Aufgabe durch die folgenden Schritte gelöst:
- Befüllen wenigstens einer Dosierkammer mit einer Flüssigkeit,
- Verschließen der gefüllten Dosierkammer/n durch Lageänderung des beweglichen Elementes und
- Abgabe der dosierten Flüssigkeitsmenge.

In weiterer Ausgestaltung der Erfindung sind wenigstens zwei Dosierkammern in einem beweglichen Element derart angeordnet, daß die Dosierkammern wechselweise mit der Flüssigkeitsleitung und der Druckluftleitung in Verbindung stehen. Auf diese Weise ist es möglich, durch die abwechselnde Dosierung zweier Dosierkammern einen gleichmäßigen Volumenstrom zu erzeugen. Dadurch, daß die jeweils von der Flüssigkeitsleitung durchspülte Dosierkammer eine blasenfreie, ihrer Größe entsprechende Menge der Flüssigkeit aufnimmt, erfolgt die Dosierung mit einer hohen Genauigkeit und sind die weiter oben beschriebenen Nachteile des Standes der Technik hinsichtlich der Ausgasung empfindlicher Flüssigkeiten zuverlässig ausgeschlossen.

In einer zweckmäßigen Weiterbildung der Erfindung ist das bewegliche Element als in einem Zylinder linear verschiebbarer Kolben ausgeführt und sind zwei Dosierkammern vorhanden, die von in den Kolben eingebrachten umlaufenden Nuten gebildet werden. Eine solche Ausgestaltung der erfindungsgemäßen Vorrichtung ist hinsichtlich ihres Aufbaus einfach, verschleißarm und sehr zuverlässig, da nach einer weiteren Lehre der Erfindung in jeder Endstellung des Kolbens jeweils eine Dosierkammer mit der Flüssigkeitleitung und die andere Dosierkammer mit der Druckluftleitung in Verbindung stehen. Es ist jedoch auch denkbar, als bewegliches Element ein die Dosierkammern enthaltendes Dreh- oder Schwenkelement vorzusehen.

Zur Führung des Kolbens dient dabei ein Zylinder, der von einem Hauptkörper und zwei Stirnplatten gebildet ist, wobei in den Stirnplatten Leitungen zur Druckbeaufschlagung des Kolbens angeordnet sind. Dadurch, daß der Kolben zwei definierte Endstellungen aufweist, ist eine genaue Positionierung der Dosierkammern vor der jeweiligen Flüssigkeitseinlaß- bzw. Auslaßöffnung mit geringem technischen Aufwand zuverlässig realisiert.

Besonders zweckmäßig ist es, daß der Kolben an seinen Enden zum Zylinder hin mit Dichtungen abgedichtet ist und beiderseits der Dosierkammern umlaufende Nuten als Leckageleitung aufweist.

Die hohe Zuverlässigkeit der erfindungsgemäßen Vorrichtung wird nach einer weiteren Ausgestaltung der Erfindung noch erhöht, wenn die jeweilige Endstellung des Kolbens mittels eines Sensors detektierbar ist. Auf diese Weise ist zuverlässig gewährleistet, daß die Lage der Dosierkammern in bezug auf die Lage der Flüssigkeits- bzw. Druckluftleitungen stets exakt ausgerichtet sind.

Hinsichtlich des Verfahrens wird eine besonders vorteilhafte Wirkung dann erreicht, wenn zur Abgabe der dosierten Flüssigkeitsmenge die gesamte Dosierkammer mit Druckluft beaufschlagt wird, so daß gleichzeitig mit der Dosierung eine Zerstäubung der Flüssigkeit zu einem Aerosol einhergeht. Dies ist für eine Verwendung zur Sterilisierung von für Lebensmittel vorgesehene Packungen von besonderem Vorteil, da größere H₂O₂-Tröpfchen im Inneren der Packungen, welche durch eine nachgeschaltete Ausspülung nicht entfernbar wären, nicht auftreten können.

Nachfolgend wird die Erfindung anhand eines bevorzugten Ausführungsbeispiels näher beschrieben. In der Zeichnung zeigen:
- Fig. 1: eine erfindungsgemäße Vorrichtung im Längsschnitt,
- Fig. 2: die erfindungsgemäße Vorrichtung aus Fig. 1 im Querschnitt entlang der Linie II-II in den Fig. 1 und 3 und
- Fig. 3: die erfindungsgemäße Vorrichtung im Schnitt entlang der Linie III-III in Fig. 2.

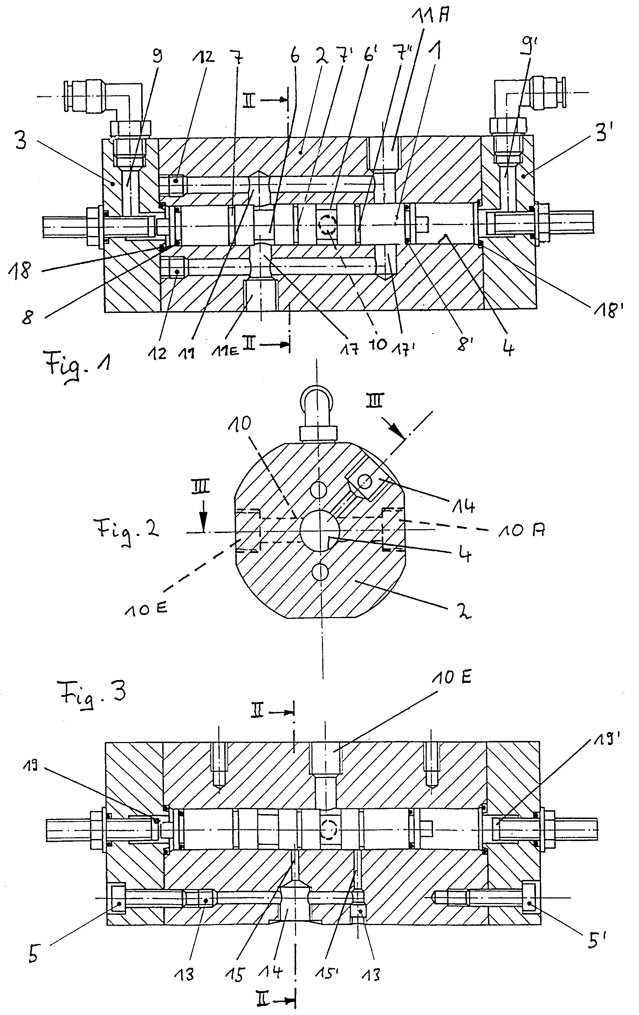

Die im Ausführungsbeispiel dargestellte und insofern besonders bevorzugte Vorrichtung weist zunächst einen Kolben 1 auf, der in einem aus Hauptkörper 2 und Stirnplatten 3 und 3' bestehenden Zylinder 4 fliegend geführt ist. Dabei sind Hauptkörper 2 und Stirnplatten 3 bzw. 3' mittels Schrauben 5, 5' verbunden, wie aus Fig. 3 hervorgeht. Der besseren Übersicht halber sind diejenigen Konstruktionsteile, die bereits in Fig. 1 bezeichnet sind, in Fig. 3 nicht nochmals mit Bezugszeichen versehen.

Der Kolben 1 weist im dargestellten Ausführungsbeispiel zwei Dosierkammern 6 und 6' auf. Beiderseits dieser Dosierkammern 6, 6' sind umlaufende Nuten 7, 7', 7'' als Leckagespeicher vorhanden.

Aus den Fig. 1 und 3 geht deutlich hervor, daß der Kolben 1 darüber hinaus an seinen Enden weitere nicht näher bezeichnete umlaufende Nuten aufweist, in denen Dichtungen 8, 8' angeordnet sind, um ein Eindringen der zu dosierenden Flüssigkeit in den Zylinderraum zu verhindern.

Die Steuerung des Kolbens von einer in die entsprechende andere Endstellung erfolgt mittels durch Steuerleitungen 9, 9' wechselweise geführte Druckluft. In die entsprechenden Auslässe der Steuerleitungen 9, 9' sind nicht näher bezeichnete Anschlußstutzen eingesetzt, wie insbesondere aus den Fig. 1 und 2 hervorgeht.

Die zu dosierende Flüssigkeit gelangt nun durch einen Flüssigkeitseinlaß 10E in einer Endstellung des Kolbens 1 in die Dosierkammer 6', wie aus Fig. 3 deutlich hervorgeht.

Dadurch, daß Fig. 3 einen Schnitt in abgewinkelter Ebene darstellt, ist der Flüssigkeitsauslaß 10A in Fig. 3 nicht zu erkennen. Aus diesem Grunde wurde die durch den Zylinder 4 hindurchgeführte Flüssigkeitsleitung 10 in Fig. 2 nochmals gestrichelt dargestellt. Wesentliches Element der Erfindung ist also die Erkenntnis, daß die Dosierkammer in einen durch die Flüssigkeitsleitung 10 geführten Flüssigkeitsstrom hineinbewegt wird. Dabei wird der Ringraum der Dosierkammer 6' vollständig gefüllt.

Da der Kolben 1 in den Fig. 1 und 3 sich in der gleichen Stellung befindet, ist die zweite Dosierkammer 6 in beiden Figuren während der Füllung der ersten Dosierkammer 6' mit einer Druckluftleitung 11 im Hauptkörper 2 verbunden, wie aus Fig. 1 deutlich hervorgeht. Die im Hauptkörper befindlichen Druckluftleitungen 11 sind dabei entsprechend aufeinander abgestimmte Bohrungen, deren Enden mit entsprechenden Stopfen 12 verschlossen sind, so daß je nur ein einziger Drucklufteinlaß 11E und Druckluftauslaß 11A vorhanden sind. Auf diese Weise ist es möglich, durch in den Drucklufteinlaß 11E eingeblasene Treibluft nicht nur die Dosierkammer vollständig zu entleeren, sondern darüber hinaus bereits während der Dosierung ein Aerosol-Gemisch herzustellen.

Wie bereits erwähnt, können beim Füllen der Dosierkammern 6, 6' auch Teile der Flüssigkeit in die Ringspalten der Nuten 7, 7' und 7'' gelangen. Die jeweils der zu füllenden Dosierkammer 6 oder 6' benachbarten Ringnuten 7, 7' oder 7', 7'' stehen dabei mit einem Leckageauslaß 14 über entsprechende Leckageleitungen 15, 15' in Verbindung, wie aus den Fig. 2 und 3 hervorgeht. Die aus dem Leckageauslaß 14 austretende Flüssigkeit kann aufgefangen und wiederverwendet werden. Die durch Bohrungen hergestellten Leckageleitungen 15, 15' sind gleichfalls mit Stopfen 13 verschlossen und stehen nur mit einem einzigen Leckageausstoß 14 in Verbindung.

Es versteht sich von selbst, daß bei einer ausreichend hohen Taktzahl des Kolbens 1 und/oder bei entsprechender Anordnung von Dosierkammern 6, 6' und Flüssigkeitsleitung 10 sowie Druckluftleitung 11 ein nahezu kontinuierlicher Aerosol-Strom mit einem konstanten Fördervolumen eingestellt werden kann.

Um die durch die Steuerleitungen 9, 9' geführte Steuerluft nicht im Spalt zwischen Hauptkörper 2 und Stirnplatten 3 bzw. 3' entweichen zu lassen, sind in den Endbereichen des Zylinders 4 Dichtungen 18, 18' angeordnet. Im dargestellten und insoweit bevorzugten Ausführungsbeispiel dienen darüber hinaus in die Steuerleitungen 9, 9' eingesetzte Sensoren 19, 19' dazu, die exakte jeweilige Endstellung des Kolbens 1 zu erkennen. Als Sensoren können hierzu beispielsweise handelsübliche Näherungsschalter verwendet werden.

## Patentansprüche

1. Vorrichtung zum Dosieren einer vorgebbaren Menge einer Flüssigkeit, insbesondere H₂O₂, mit einem Flüssigkeitseinlaß, wenigstens einer Dosierkammer und einem Flüssigkeitsauslaß, **dadurch gekennzeichnet,** daß außer der Flüssigkeitsleitung (10) zwischen dem Flüssigkeitseinlaß (10E) und dem Flüssigkeitsauslaß (10A) eine Druckluftleitung (11) zwischen einem Drucklufteinlaß (11E) und einem Druckluftauslaß (11A) vorgesehen ist und daß wenigstens eine Dosierkammer (6) abwechselnd mit der Flüssigkeitsleitung (10) und mit der Druckluftleitung (11) in Verbindung bringbar ist.

2. Vorrichtung nach Anspruch 1,
**dadurch gekennzeichnet,** daß wenigstens zwei Dosierkammern (6, 6') in einem beweglichen Element derart angeordnet sind, daß die Dosierkammern (6, 6') wechselweise mit der Flüssigkeitsleitung (10) und der Druckluftleitung (11) in Verbindung stehen.

3. Vorrichtung nach Anspruch 2,
**dadurch gekennzeichnet,** daß das bewegliche Element als in einem Zylinder (4) linear verschiebbarer Kolben (1) ausgeführt ist und zwei Dosierkammern (6, 6') vorhanden sind, die von in den Kolben (1) eingebrachten umlaufenden Nuten gebildet werden.

4. Vorrichtung nach Anspruch 3,
**dadurch gekennzeichnet,** daß in jeder Endstellung des Kolbens (1) jeweils eine Dosierkammer (6 bzw. 6') mit der Flüssigkeitsleitung (10) und die andere Dosierkammer (6' bzw. 6) mit der Druckluftleitung (11) in Verbindung stehen.

5. Vorrichtung nach Anspruch 3 oder 4,
**dadurch gekennzeichnet,** daß der Zylinder (4) einen Hauptkörper (2) und zwei Stirnplatten (3, 3') aufweist und daß in den Stirnplatten (3, 3') Leitungen (9, 9') zur Druckbeaufschlagung des Kolbens (1) angeordnet sind.

6. Vorrichtung nach einem der Ansprüche 3 bis 5,
**dadurch gekennzeichnet,** daß der Kolben (1) an seinen Enden mit Dichtungen (8, 8') zum Zylinder (4) hin abgedichtet ist und beiderseits der Dosierkammern (6, 6') umlaufende Nuten (7, 7', 7'') als Leckageleitung aufweist.

7. Vorrichtung nach einem der Ansprüche 3 bis 6,
**dadurch gekennzeichnet,** daß die jeweilige Endstellung des Kolbens (1) mittels eines Sensors (19 bzw. 19') detektierbar ist.

8. Verfahren zum Dosieren einer vorgebbaren Menge einer Flüssigkeit mit einer Vorrichtung nach einem der Ansprüche 1 bis 7,
**gekennzeichnet durch** die folgenden Schritte:
- Befüllen wenigstens einer Dosierkammer mit einer Flüssigkeit,
- Verschließen der gefüllten Dosierkammer/n durch Lageänderung des beweglichen Elementes und
- Abgabe der dosierten Flüssigkeitsmenge.

9. Verfahren nach Anspruch 8,
**dadurch gekennzeichnet,** daß zur Abgabe der dosierten Flüssigkeitsmenge die gesamte Dosierkammer mit Druckluft beaufschlagt wird, so daß gleichzeitig eine Zerstäubung der Flüssigkeit zu einem Aerosol einhergeht.
